# EUROPÄISCHE PATENTSCHRIFT

(11) **EP 1 451 980 B1**
(45) Veröffentlichungstag und Bekanntmachung des Hinweises auf die Patenterteilung: **11.08.2010**
(21) Anmeldenummer: 01995603.6
(22) Anmeldetag: 10.12.2001
(51) Int. Cl.: H04L 12/56

(54) **VERFAHREN ZUR UEBERTRAGUNG VON DATEN VON APPLIKATIONEN MIT UNTERSCHIEDLICHER QUALITÄT**
METHOD FOR TRANSMITTING DATA OF APPLICATIONS WITH DIFFERENT QUALITY
PROCEDE DE TRANSMISSION DE DONNEES D'APPLICATION AVEC UNE QUALITE DIFFERENTE

(43) Veröffentlichungstag der Anmeldung: 01.09.2004
(73) Patentinhaber: Nokia Siemens Networks GmbH & Co. KG, 81541 München (DE)
(72) Erfinder: HOFMANN, Jens, 16552 Schildow (DE); SCHNEIDER, Jens, 10119 Berlin (DE)
(86) Internationale Anmeldenummer: PCT/DE2001/004724
(87) Internationale Veröffentlichungsnummer: WO 2003/055154

(56) Entgegenhaltungen:
- US-A1- 2001 025 310
- US-A1- 2001 030 970

## Beschreibung

Die vorliegende Erfindung betrifft ein Verfahren zur Übertragung von Daten von Applikationen mit unterschiedlichen Anforderungen an die Qualität eines Übertragungsdienstes in einem paketvermittelnden Datenkommunikationsnetz.

In paketvermittelnden Datenkommunikationsnetzen mit beispielsweise auf IP basierten Übertragungsmechanismen werden unterschiedliche Datentypen von verschiedenen Applikationen über ein Netzwerk von einer Quelle zu einem Ziel übertragen. Hierbei variieren die Anforderungen an die Art und Weise der Übertragung zwischen verschiedenen Applikationen sehr stark. Dies gilt insbesondere für die Übertragung von Daten von Applikationen, die eine Übertragung in Echtzeit und/oder mit einer garantierten Bitrate anfordern gegenüber einer Übertragung von Daten, bei denen keine strengen Anforderungen nach einer Übertragung in Echtzeit und/oder nach einer Garantie einer Bitrate gestellt werden. Applikationen mit der Anforderung von
Übertragungen in Echtzeit und mit garantierter Bitrate sind beispielsweise Sprachtelefonie, Online-Radio und Video-Übertragung. Elektronische Maildienste oder Anwendungen des Internets, wie beispielsweise Web-Surfen, hingegen haben keine vergleichbaren Anforderungen an eine Übertragung.

Die US 2001/025310 A1 beschreibt eine Methode zur Behandlung von Daten mit unterschiedlichen QoS-Anforderungen in einem Netzwerk. Der hier beschriebene Ansatz besteht darin, jedes Datenpaket mit einer Information über die geforderte Übertragungsqualität zu versehen. Dabei werden in einem Datennetz bestimmte Qualitätsklassen, welche die Übertragungsanforderung in geeigneter Weise widerspiegeln, definiert. Jedes Datenpaket wird einer QoS-Klasse zugeordnet und mit einer entsprechenden Information versehen. Jeder Netzwerkknoten, der Daten in einem solchen Netzwerk weiterleitet, priorisiert die Weiterleitung des Pakets anhand der QoS-Information, die sich in jedem Datenpaket befindet. Das bedeutet, dass in jedem Datenpaket explizit eine Information über die Quality of Service verfügbar sein muss

Ein wesentliches Merkmal von paketvermittelnden Datenkommunikationsnetzen besteht darin, dass eine Datenübertragung nicht über dediziert geschaltete Datenpfade, sondern über virtuelle Datenpfade nach dem Prinzip des statistischen Multiplexen erfolgt. Unter Multiplexen versteht man dabei das gleichzeitige Übertragen mehrerer Informationen über den gleichen Übertragungspfad auf Grundlage der zeitlichen statistischen Verteilung der verschiedenen Informationen. Die Daten, die in solchen Netzen üblicherweise übertragen werden, zeichnen sich durch eine sogenannte "Burst-" Charakteristik, d.h. durch zeitliche Schwankungen ihrer Bandbreite aus Um die Daten effektiv übertragen zu können, werden sie im Allgemeinen zwischen Kommunikationsknoten des paketvermittelnden Datenkommunikationsnetzes aggregiert und anhand statistischer Annahmen gemeinsam über vorhandene Transportwege, d.h. über virtuelle Datenpfade von Kommunikationsknoten zu Kommunikationsknoten übertragen. Es existiert keine exklusive Bereitstellung von Übertragungsressourcen für einzelne Applikationen auf einer "Ende zu Ende"-Basis. Durch das statistische Multiplexen werden die vorhandenen Übertragungsressourcen effektiv genutzt. Im Gegensatz dazu wird in den leitungsvermittelnden Datenkommunikationsnetzen für jede Applikation ein eigener Pfad durch das Datenkommunikationsnetz zur Verfügung gestellt, auf dem sowohl die Übertragungszeit wie auch die Bandbreite garantiert wird. Falls hier Daten mit einer variablen Bitrate übertragen werden, wird die zur Verfügung stehende Bandbreite im Falle von Pausen oder Perioden geringer Übertragungsrate nicht ausgeschöpft.

Jede Applikation eines mobilen paketvermittelnden Datenkommunikationsnetzes fordert für die Dauer der Applikation vom Datenkommunikationsnetz bestimmte Ressourcen der Transferkapazität an, um eine "Ende zu Ende"-Kommunikation zu ermöglichen. In mobilen paketvermittelnden Datenkommunikationsnetzen wird dazu in jedem betroffenen Kommunikationsknoten, der passiert werden muss, ein sogenannter Kontext mit einem entsprechenden Satz von Parametern angelegt. Ein Kontext enthält alle relevanten Informationen, die den für die Übertragung der Daten nötigen Dienst ausreichend beschreibt. Insbesondere fordert jede Applikation vom Datenkommunikationsnetz einen bestimmten Übertragungsdienst in einer bestimmten Qualität (QoS - Quality of Service) an. Diese Anforderung ist durch sogenannte QoS-Parameter, wie beispielsweise einer maximalen Bitrate, einer zu garantierenden Bitrate und einer maximal zulässigen Verzögerung gekennzeichnet. Beim Kreieren eines Kontextes handelt jeder Kommunikationsknoten entsprechend seiner vorhandenen Ressourcen diese QoS-Parameter aus, wobei die Aushandlung der Parameter jeweils stufenweise erfolgt. Die Übertragung der Daten der jeweiligen Applikation erfolgt dann auf Basis dieser, in allen zu passierenden Kommunikationsknoten gleichen ausgehandelten und abgespeicherten QoS-Parametern.

Das Problem der Übertragung von Daten von Applikationen mit unterschiedlichen Anforderungen an die Qualität der Übertragung wurde bislang auf unterschiedliche Weise gelöst.

Es gibt eine QoS-Architektur der 3GPP (TS 23.107), die bestimmte QoS-Funktionen für Mobilfunknetze der 3. Generation (UMTS) beschreibt. Die Realisierung in einzelnen Kommunikationsknoten ist jedoch nicht genauer spezifiziert. Ferner gibt es Ansätze, die Verfahren zur Übertragung von Daten von Applikationen mit unterschiedlichen QoS-Anforderungen in einem Datenkommunikationsnetz beschreiben.

Ein erster Ansatz besteht darin, jedes Datenpaket mit einer Information über die geforderte Übertragungsqualität zu versehen. Dabei werden in einem Datenkommunikationsnetz bestimmte Qualitätsklassen, welche die Übertragungsanforderungen in geeigneter Weise widerspiegeln, definiert. Man bezeichnet diese Klassen dann als Quality-of-Service-Klassen. Jedes Datenpaket wird einer QoS-Klasse zugeordnet und mit einer entsprechenden Information versehen. Jeder zu passierende Kommunikationsknoten, der Daten in einem solchen Datenkommunikationsnetz weiterleitet, priorisiert die Weiterleitung eines Datenpaketes anhand der QoS-Information, die sich in jedem Datenpaket befindet. Eine übliche Behandlung besteht dabei darin, Pakete je nach darin enthaltener QoS-Information in entsprechende Warteschlangen (Queues) zu verteilen. Diese Warteschlangen werden entsprechend ihrer QoS-Klasse unterschiedlich schnell geleert und weitergeleitet. Durch diesen Ansatz steigt statistisch die Wahrscheinlichkeit, dass ein hochpriorisiertes Datenpaket sehr viel schneller durch das Datenkommunikationsnetz geleitet wird als ein Datenpaket mit niedriger Priorität. Nachteilig an diesem Ansatz ist, dass es keine garantierte Übertragungszeit und Übertragungsrate innerhalb des Datenkommunikationsnetzes gibt. Weitere Nachteile bestehen darin, dass Datenpakete mit einer Anforderung einer Übertragung in Echtzeit in jeder Warteschlange zwischengespeichert und damit verzögert werden. Ferner ist es nachteilig, dass die Information über die Zugehörigkeit zu einer QoS-Klasse in jedem Datenpaket enthalten sein muss und dass das Format dieser Information im gesamten Datenkommunikationsnetz gleich sein muss. Dieser Ansatz wird beispielsweise im Standard RFC 2474 der IETF (Internet Engineering Task Force) beschrieben.

Ein zweiter Ansatz, um das oben beschriebene Problem zu lösen, besteht darin, für jede QoS-Klasse unterschiedliche Datenpfade innerhalb des Datenkommunikationsnetzes einzurichten. Wenn ein Kommunikationsknoten ein Datenpaket einer QoS-Klasse zuordnen kann, wird dieses Datenpaket auf einem Datenpfad weitergeleitet, der dieser QoS-Klasse entspricht. Nachteilig an diesem Verfahren sind die Kosten bei Einrichtung und Betrieb einer großen Anzahl von verschiedenen Pfaden unterschiedlicher Qualität zwischen verschiedenen Kommunikationsknoten. Die Einrichtung von verschiedenen Pfaden unterschiedlicher QoS-Klassen ist in verschiedenen Standards definiert worden, beispielsweise in der Traffic Management Specification, vom ATM Forum auch AF-TM-0121.000 genannt.

Ein dritter Ansatz besteht darin, am Zugangsknoten in das Datenkommunikationsnetz, einem sogenannten Edge Node, den Gesamtverkehr auf einen vordefinierten Verkehr zu begrenzen. Innerhalb des Datenkommunikationsnetzes wird dieser Verkehr dann nicht mehr unterschieden, da vorausgesetzt wird, dass das Datenkommunikationsnetz hinreichend dimensioniert ist. Der Nachteil dieses Ansatzes ist die fehlende Garantie bezüglich Übertragungszeit und Übertragungsrate. Dieser Ansatz wird beispielsweise von der Service Level Agreement Working Group der IETF spezifiziert.

Es war eine Aufgabe der Erfindung ein Verfahren bereit zu stellen, mit dessen Hilfe Daten von Applikationen mit unterschiedlichen Übertragungsanforderungen möglichst effizient und unter Vermeidung oben aufgeführter Nachteile innerhalb eines Datenkommunikationsnetzes übertragen werden können.

Gelöst wird diese Aufgabe durch das erfindungsgemäße Verfahren gemäß Anspruch 1. Weitere vorteilhafte Ausführungsformen des erfindungsgemäßen Verfahrens sind in den Unteransprüchen aufgeführt.

Gemäß Anspruch 1 wird ein Verfahren zur Übertragung von Daten von Applikationen mit unterschiedlichen Übertragungsanforderungen in einem paketvermittelnden Datenkommunikationsnetz mit Kommunikationsknoten bereitgestellt, wobei das Verfahren mindestens die folgenden Schritte aufweist:
a. Begrenzen der Daten einer jeden Applikation auf eine vorgegebene Bitrate in einem bei der Übertragung der Daten einer jeweiligen Applikation zu passierenden Kommunikationsknoten,
b. Kreieren und Speichern von applikationsspezifischen Kontexten in allen bei der Übertragung der Daten einer jeweiligen Applikation zu passierenden Kommunikationsknoten,
c. Reservieren von Übertragungsressourcen in allen bei der Übertragung der Daten einer jeweiligen Applikation zu passierenden Kommunikationsknoten entsprechend den applikationsspezifischen Kontexten,
d. Weiterleiten der Daten einer jeden Applikation von einem von der jeweiligen Applikation zu passierenden Kommunikationsknoten zu einem weiteren zu passierenden Kommunikationsknoten entsprechend den applikationsspezifischen Kontexten.

In einer bevorzugten Ausführungsform des erfindungsgemäßen Verfahrens wird Schritt a. in einem Zugangskommunikationsknoten (Edge Node) zu dem paketvermittelnden Datenkommunikationsnetz durchgeführt. Ein ankommender Strom von Daten einer Applikation wird auf eine vorgegebene, vorzugsweise auf eine durch die in dem Datenkommunikationsnetz vorhandenen Ressourcen bestimmte maximal zulässige Bitrate begrenzt. Damit ist sichergestellt, dass eine unzulässige Überschreitung in den nachfolgenden zu passierenden Kommunikationsknoten in dem Datenkommunikationsnetz nicht mehr möglich ist.

Besonders bevorzugt wird das Begrenzen der Daten einer jeden Applikation auf eine vorgegebene Bitrate dadurch realisiert, dass parallel zum Weiterleiten der Daten einer jeweiligen Applikation die Menge dieser Daten über ein festsetzbares Zeitintervall gemessen und mit der zur vorgegebenen Bitrate korrespondierenden Datenmenge verglichen wird. Das bedeutet, dass über ein bestimmtes Zeitintervall (Messintervall) die Größe von ankommenden Datenpaketen parallel zu ihrer Weiterleitung aufsummiert wird. Dieser Wert spiegelt die Datenmenge innerhalb dieses Zeitintervalls wieder. Wird nun beispielsweise die zur maximalen Bitrate korrespondierende maximal zulässige Datenmenge in diesem Zeitintervall erreicht, kann diese Information benutzt werden, um zu entscheiden, ob nachfolgende Datenpakete verworfen oder eventuell weitertransportiert werden, da die Gesamtressourcen des Kommunikationsknotens dies zulassen. Mit Beginn des darauffolgenden Messintervalls beginnt eine erneute Aufsummierung der Größe der Datenpakete, wobei diese Summierung auch von einem Startwert ungleich Null ausgehen kann, um beispielsweise vorhergehende Bursts zu berücksichtigen. Damit wird zum einen eine Verzögerung der Datenpakete minimiert und zum anderen eine Überschreitung der ausgehandelten Datenrate in den darauffolgenden Kommunikationsknoten vermieden. Gleichzeitig brauchen alle anderen auf diesem Datenpfad zu passierenden Kommunikationsknoten in dem Datenkommunikationsnetzes keine Überwachung der maximal zulässigen Bitrate mehr vorzunehmen.

In einer bevorzugten Ausführungsform des erfindungsgemäßen Verfahrens (in Schritt c.) leitet jeder von den Daten einer jeweiligen Applikation zu passierende Kommunikationsknoten aus einer von der jeweiligen Applikation angeforderten garantierten Bitrate und einer maximal zu unterstützenden Bitrate einen Bandbreitenwert für eine zu reservierende Übertragungsressource ab und reserviert diese.

In einer weiteren bevorzugten Ausführungsform des erfindungsgemäßen Verfahrens wird Schritt c. des Verfahrens nur für Daten von Applikationen durchgeführt, die eine Übertragung in Echtzeit erfordern. Das bedeutet, dass beim Aufbau eines Kontextes für eine Applikation mit der Anforderung einer Echtzeitübertragung (Echtzeit-Applikation) jeder zu passierende Kommunikationsknoten aus angeforderter garantierter Bitrate und der maximal zu unterstützenden Bitrate einen bestimmten Bandbreitenwert für eine zu reservierende Ressource (B_{EchtAppl}) ableitet und diese Bandbreite für diese Applikation reserviert. Bei der Berechnung der zu reservierenden Bitrate können auch Messungen über den tatsächlichen Ressourcenbedarf aktiver und aktiv gewesener Applikationen eingehen. Generell wird für den gesamten Echtzeitverkehr im Kommunikationsknoten ein bestimmter Anteil der Ressourcen (B_{SumEcht}) der gesamten Übertragungsbreite Bₜₒₜₐₗ vorgehalten. Das bedeutet, dass der für die Applikation ermittelte Bandbreitenwert (B_{EchtAppl}) dem für den Echtzeitverkehr vorgehaltenen Anteil B_{SumEcht} entnommen wird. Damit steht der Applikation die Bandbreite B_{EchtAppl} des Kommunikationsknotens zur Verfügung. Mit dem Ende der Applikation werden diese reservierten Ressourcen wieder freigegeben. Der für den Echtzeitverkehr vorgehaltene Anteil B_{SumEcht} wird vorzugsweise immer kleiner gewählt als die gesamte Bandbreite des Kommunikationsknotens. Damit ist sichergestellt, dass zum einen ein bestimmter Anteil der Ressourcen für Applikationen, die keine Echtzeitübertragung anfordern (Nichtecht-zeit-Applikation), zur Verfügung steht und dass zum anderen kurzzeitige Überschreitungen der reservierten Bandbreite (Bursts) für Echtzeit-Applikationen ebenfalls übertragen werden können. Für Applikationen ohne Anforderung einer Echtzeitübertragung und ohne garantierte Bitrate erfolgt keine Bandbreitenreservierung für eine einzelne Applikation. Statt dessen wird der nicht reservierte Anteil B_{SumNichtEcht} der gesamten Ressourcen für alle derartigen Anwendungen freigehalten (B_{sumNichtEcht}=Bₜₒₜₐₗ-B_{SumEcht}). Gleichzeitig können Applikationen ohne Anforderung einer Echtzeitübertragung auch immer die Ressourcen nutzen, die für Echtzeit-Applikationen vorgehalten werden, aber temporär nicht von diesen genutzt werden. Über statistisches Multiplexen können Daten dieser Applikation mit einer bestimmten Wahrscheinlichkeit transportiert werden. Übersteigt die tatsächliche Datenmenge des Nicht-Echtzeitverkehrs die für ihn zur Verfügung stehende Bandbreite, wird dieser Verkehr verzögert bzw. verworfen.

Die tatsächlich zu transportierende Summe der Daten der Echtzeit-Applikationen kann die dafür reservierten Ressourcen überschreiten. Dies ist beispielsweise der Fall, wenn Datenströme mit der maximalen Bitrate für alle oder viele Echtzeit-Applikationen zum gleichen Zeitpunkt im Kommunikationsknoten eintreffen und für diese Dienste eine geringere Bandbreite reserviert wurde. Tritt dieser Fall ein, werden Teile der für Nichtechtzeit-Applikationen vorgesehenen Ressourcen für den Transport der Daten der Echtzeit-Applikationen mitbenutzt. Entsprechend weniger Ressourcen stehen dann für die Datenübertragung von Nichtechtzeit-Applikationen zur Verfügung. Von dem Anteil der vorgehaltenen Ressourcen B_{SumEcht} und dem Berechnungsalgorithmus für die zu reservierende Bandbreite hängt es ab, wie stark die Daten der Echtzeit-Applikationen die reservierten Ressourcen überschreiten können und wie groß die Wahrscheinlichkeit ist, dass Daten von Nichtechtzeit-Applikationen transportiert werden. Dabei kann unter anderem auch die Anzahl der statistisch multiplexten Datenströme der Applikationen eine Rolle spielen. Je größer der reservierte Anteil für Echtzeit-Applikationen ist, umso geringer ist die Wahrscheinlichkeit, dass temporäre Überschreitungen (Bursts) der reservierten Bandbreite übertragen werden können. Je größer der Anteil der reservierte Anteil für Echtzeit-Applikationen ist, desto geringer ist auch die Wahrscheinlichkeit, dass Daten von Nichtechtzeit-Applikationen transportiert werden.

In einer besonders bevorzugten Ausführungsform des erfindungsgemäßen Verfahrens ist dieses Verhalten bei der Aktivierung eines Kontextes, d.h. beim Verhandeln der QoS-Parameter, beeinflussbar. Beim Kreieren der applikationsspezifischen Kontexte in jedem Kommunikationsknoten ist das Verhältnis aus einer von der jeweiligen Applikation angeforderten garantierten Bitrate und einer maximal zu unterstützenden Bitrate vorzugsweise variierbar und somit einschränkbar.

Erfindungsgemäß ist es unter bestimmten Annahmen auch möglich, eine Übertragung von Daten für Echtzeit-Applikationen bis zur maximalen garantierten Bitrate B_{maxEchtAppl} in jedem Kommunikationsknoten vorzunehmen, ohne dass es bei der Übertragung dieser Daten und garantierten Bitrate zu Staus oder dem Verwerfen von Datenpaketen kommt. Zum einen sollten Bursts, d.h. kurzzeitiges Senden mit hohen Bitraten, statistisch verteilt auftreten. Dabei wird dann mit hoher Wahrscheinlichkeit die Summe der reservierten Bandbreite B_{SumEcht} nicht überschritten. Im Falle von Überschreitungen wird ein Teil der Ressourcen mitbenutzt, der für Nichtechtzeit-Applikationen vorgehalten wurde. Dabei darf die Summe der maximalen Bitrate aller Kontexte die Gesamtressourcen eines Kommunikationsknotens einen nach üblichen Dimensionierungsmethoden bestimmtes Maß nicht überschreiten.

In einer weiteren bevorzugten Ausführungsform des erfindungsgemäßen Verfahrens werden in Schritt d. des erfindungsgemäßen Verfahrens die Daten der Applikationen entsprechend den applikationsspezifischen Kontexten in mindestens zwei Kategorien eingeteilt und entsprechend diesen Kategorien weitergeleitet. Diese zwei Kategorien stellen vorteilhafterweise mindestens die Einteilung in Echtzeit-Applikationen und Nichtechtzeit-Applikationen dar. Diese Kategorisierung wird vorzugsweise in jedem Kommunikationsknoten vorgenommen und erfolgt, wie bereits erwähnt, nach den in dem Kommunikationsknoten vorliegenden Kontexten. Jedes Datenpaket, das einer Echtzeit-Applikation zugeordnet wurde, wird sofort ohne Zwischenspeicherung zum nächsten Kommunikationsknoten weitergeleitet. Pakete ohne Echtzeitanforderung können in Warteschlangen (Queues) zwischengespeichert werden und entsprechend eines bestimmten Auslesemechanismus aus der Warteschlange weitergeleitet werden. Dieser Auslesemechanismus kann beispielsweise die zur Verfügung stehenden Transferressourcen für den gesamten Nicht-Echtzeitverkehr oder für Teile davon nach einem vordefinierten Schema verteilen oder eine einfache Priorisierung der Warteschlangen realisieren. Die zur Verfügung stehenden Transferressourcen für die Nicht-Echtzeitdaten hängen dabei vom momentanen Datenaufkommen der Echtzeitdaten ab.

Der besondere Vorteil der vorliegenden Erfindung besteht darin, dass durch Kombination der beschriebenen Mechanismen wie Reservierung von Transferressourcen, Begrenzung von Datenströmen einzelner Applikationen auf die maximale Datenrate und Priorisierung verschiedener Kategorien von aggregierten Datenströmen bei der Bearbeitung und dem Transport dieser Datenströme eine möglichst effektive und den individuellen Bedürfnissen verschiedenster Applikationen angepasste Übertragung gewährleistet werden kann.

Weitere Vorteile des erfindungsgemäßen Verfahrens werden anhand der folgenden Figuren aufgezeigt. Es zeigen:
Fig.1 Blockdiagramm zur schematischen Darstellung des Schrittes a. einer Ausführungsform des erfindungsgemäßen Verfahrens
Fig.2 Blockdiagramm zur schematischen Darstellung des Schrittes d. einer Ausführungsform des erfindungsgemäßen Verfahrens

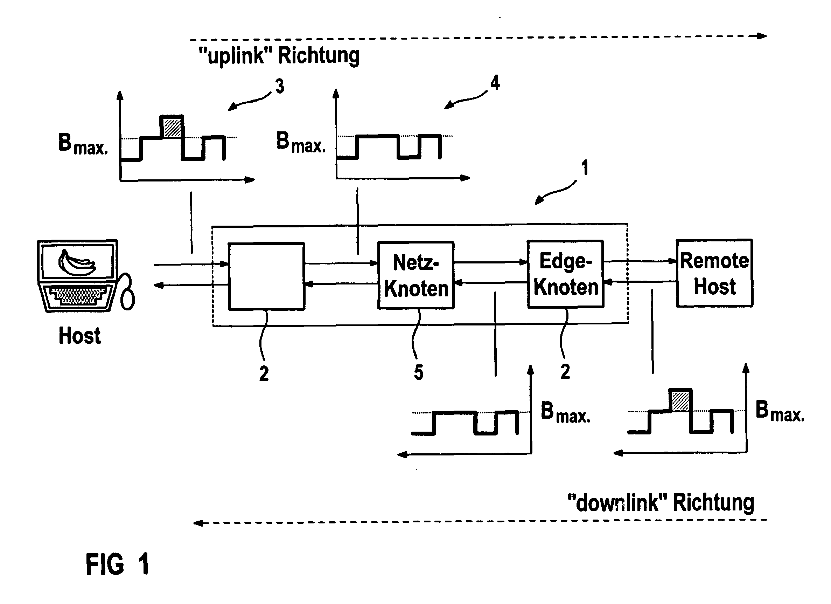

In Figur 1 ist ein Blockdiagramm dargestellt zur Beschreibung einer Möglichkeit, Daten einer Applikation auf eine vorgegebene Bitrate zu begrenzen. Die Daten einer Applikation erreichen das Datenkommunikationsnetz 1 über einen Zugangsknoten (Edge Node) 2. Um eine möglichst geringe Verzögerung im Edge Node 2 zu erreichen und um auf eine Zwischenspeicherung zur Ermittlung der Bitrate der ankommenden Daten zu verzichten, kann dieses Verhalten, wie folgt, realisiert werden: Über ein bestimmtes Zeitintervall (Messintervall) wird die Größe ankommender Datenpakete parallel zu ihrer Weiterleitung, wie sie durch den Pfeil "uplink" Richtung angedeutet ist, aufsummiert, was in dem Diagramm 3 dargestellt ist. Dieser Wert spiegelt die Datenmenge in diesem Zeitintervall wieder. Wird die zur maximalen Bitrate Bₘₐₓ korrespondierende maximal zulässige Datenmenge innerhalb dieses Intervalls erreicht, so kann diese Information benutzt werden, um zu entscheiden, ob nachfolgende Daten verworfen werden, wie in Diagramm 4 dargestellt oder eventuell weitertransportiert werden, da die Gesamtressourcen des Edge Nodes 2 es zulassen. Derselbe Mechanismus erfolgt in der Umkehrrichtung, d.h. in der "downlink" Richtung. Mit Beginn eines nächsten Zeitintervalls bzw. eines Messintervalls beginnt eine erneute Aufsummierung der Größe der Datenpakete, wobei diese Summierung auch von einem Startwert ungleich Null ausgehen kann, um beispielsweise Bursts zu berücksichtigen. Damit wird zum einen die Verzögerung der Datenpakete minimiert und zum anderen eine Überschreitung der ausgehandelten Datenrate in nachfolgenden Kommunikationsknoten 5 vermieden. Gleichzeitig brauchen alle anderen zu passierenden Kommunikationsknoten 5 keine Überwachung der maximalen Bitrate Bₘₐₓ mehr vornehmen.

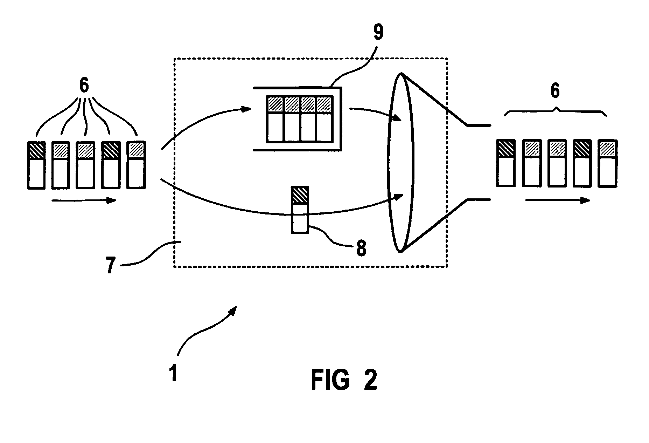

In Figur 2 ist ein Blockdiagramm zur schematischen Darstellung des Schrittes d. einer Ausführungsform des erfindungsgemäßen Verfahrens gezeigt. Dargestellt ist eine Weiterleitung von Datenpaketen 6 von verschiedenen Applikationen durch ein Datenkommunikationsnetz 1, das mehrere Kommunikationsknoten 7 umfasst. Wird eine Applikation angefordert, so wird in den Kommunikationsknoten 7 des Datenkommunikationsnetzes 1, die von Daten bzw. Datenpaketen 6 der angeforderten Applikation zu passieren sind, ein Kontext kreiert, der unter anderem die für die Applikation anzufordernde Qualität der Übertragung (QoS) beinhaltet. Diese Anforderung ist durch verschiedene Parameter bestimmt. Dazu zählen unter anderem eine maximale Bitrate, eine garantierte Bitrate und maximal zulässige Verzögerung. Ein in dem Datenkommunikationsnetz 1 ankommendes Datenpaket 6 einer Applikation wird nun in den zu passierenden Kommunikationsknoten 7 entsprechend dem in den jeweiligen Kommunikationsknoten 7 kreierten und gespeicherten Kontext einer von zwei Kategorien 8, 9 zugeordnet. In dem dargestellten Beispiel entsprechen die zwei Kategorien 8, 9 einer Einteilung in EchtzeitApplikationen (schwarzer Streifen) 8 und Nichtechtzeit-Applikationen (grauer Streifen) 9. Diese Kategorisierung wird in jedem zu passierenden Kommunikationsknoten 7 vorgenommen. Jedes Datenpaket 6, welches einer Echtzeit-Applikation zugeordnet wurde, wird sofort ohne Zwischenspeicherung zum nächsten Kommunikationsknoten 7 weitergeleitet. Datenpakete 6 ohne Echtzeitanforderung können in Warteschlangen oder Queues zwischengespeichert und entsprechend eines bestimmten Auslesemechanismus aus der Queue weitergeleitet werden. Dieser Auslesemechanismus kann die zur Verfügung stehenden Ressourcen für die gesamten Datenpakete 6 von Nichtechtzeit-Applikationen oder für Teile davon nach einem vordefinierten Schema verteilen oder eine einfache Priorisierung der Queues realisieren. Die zur Verfügung stehenden Ressourcen für die Datenpakete 6 von Nichtechtzeit-Applikationen hängen dabei vom momentanen Datenaufkommen der Echtzeit-Applikationen ab.

## Patentansprüche

1. Verfahren zur Übertragung von Daten (6) von Applikationen mit unterschiedlichen Übertragungsanforderungen in einem paketvermittelnden Datenkommunikationsnetz (1) mit Kommunikationsknoten (2, 5, 7), wobei das Verfahren mindestens die folgenden Schritte aufweist:
a. Begrenzen der Daten (6) einer jeden Applikation auf eine vorgegebene Bitrate in einem bei der Übertragung der Daten (6) einer jeweiligen Applikation zu passierenden Kommunikationsknoten (2, 5, 7),
b. Kreieren und Speichern von applikationsspezifischen Kontexten in allen bei der Übertragung der Daten (6) einer jeweiligen Applikation zu passierenden Kommunikationsknoten (2, 5, 7),
c. Reservieren von Übertragungsressourcen in allen bei der Übertragung der Daten (6) einer jeweiligen Applikation zu passierenden Kommunikationsknoten (2, 5, 7)entsprechend den applikationsspezifischen Kontexten,
d. Weiterleiten der Daten (6) einer jeden Applikation von einem von der jeweiligen Applikation zu passierenden Kommunikationsknoten (2, 5, 7) zu einem weiteren zu passierenden Kommunikationsknoten (2, 5, 7) entsprechend den applikationsspezifischen Kontexten.

2. Verfahren nach Anspruch 1,
**dadurch gekennzeichnet,**
**dass** Schritt a. in einem Zugangskommunikationsknoten (Edge Node) in das paketvermittelnde Datenkommunikationsnetz (1) durchgeführt wird.

3. Verfahren nach Anspruch 1 oder 2,
**dadurch gekennzeichnet,**
**dass** das Begrenzen der Daten (6) einer jeden Applikation auf eine vorgegebene Bitrate dadurch realisiert wird, dass parallel zum Weiterleiten der Daten (6) einer jeweiligen Applikation die Menge dieser Daten (6) über ein festsetzbares Zeitintervall gemessen und mit der zur vorgegebenen Bitrate korrespondierenden Datenmenge verglichen wird.

4. Verfahren nach einem der vorhergehenden Ansprüche,
**dadurch gekennzeichnet,**
**dass** Schritt c. nur für Daten (6) von Applikationen durchgeführt wird, die eine Übertragung in Echtzeit erfordern.

5. Verfahren nach einem der vorhergehenden Ansprüche,
**dadurch gekennzeichnet,**
**dass** in Schritt c. jeder von den Daten einer jeweiligen Applikation zu passierende Kommunikationsknoten (2, 5, 7) aus einer von der jeweiligen Applikation angeforderten garantierten Bitrate und einer maximal zu unterstützenden Bitrate einen Bandbreitenwert für eine zu reservierende Übertragungsressource ableitet und diese reserviert.

6. Verfahren nach einem der vorhergehenden Ansprüche,
**dadurch gekennzeichnet,**
**dass** beim Kreieren der applikationsspezifischen Kontexte in jedem Kommunikationsknoten (2, 5, 7) das Verhältnis aus einer von der jeweiligen Applikation angeforderten garantierten Bitrate und einer maximal zu unterstützenden Bitrate variierbar ist.

7. Verfahren nach einem der vorhergehenden Ansprüche.
**dadurch gekennzeichnet,**
**dass** ein bestimmter Anteil (B_{SumEcht}) an Übertragungsressourcen der gesamten Übertragungsressourcen (Bₜₒₜₐₗ) für Daten von Applikationen reserviert werden, die jeweils eine Übertragung in Echtzeit erfordern.

8. Verfahren nach Anspruch 7,
**dadurch gekennzeichnet,**
**dass** der Anteil (B_{SumEcht}) an Übertragungsressourcen, der für Daten (6) von Applikationen reserviert wird, die jeweils eine Übertragung in Echtzeit erfordern, geringer als die Gesamtheit an Übertragungsressourcen (Bₜₒₜₐₗ) gewählt wird.

9. Verfahren nach einem der vorhergehenden Ansprüche,
**dadurch gekennzeichnet,**
**dass** in Schritt d. die Daten (6) der Applikationen entsprechend den applikationsspezifischen Kontexten in mindestens zwei Kategorien (8, 9) eingeteilt werden und entsprechend diesen Kategorien (8, 9) weitergeleitet werden.

10. Verfahren nach Anspruch 9,
**dadurch gekennzeichnet,**
**dass** die zwei Kategorien einer Einteilung in Echtzeit-Applikationen (8) und in Nichtechtzeit-Applikationen (9) entsprechen.

## Claims

1. Method for transmitting data (6) from applications having different transmission requirements in a packet switched data communication network (1) comprising communication nodes (2, 5, 7), wherein the method comprises at least the following steps:
a. limiting each application's data (6) to a prescribed bit rate at a communication node (2, 5, 7) which is to be encountered when a respective application's data (6) are transmitted,
b. creating and storing application specific contexts at all of the communication nodes (2, 5, 7) which are to be encountered when a respective application's data (6) are transmitted,
c. reserving transmission resources at all of the communication nodes (2, 5, 7) which are to be encountered when a respective application's data (6) are transmitted, in line with the application specific contexts,
d. forwarding each application's data (6) from a communication node (2, 5, 7) which is to be encountered by the respective application to a further communication node (2, 5, 7) which is to be encountered, in line with the application specific contexts.

2. Method according to Claim 1,
**characterized**
**in that**
step a. is performed at an access communication node (Edge Node) into the packet switched data communication network (1).

3. Method according to Claim 1 or 2,
**characterized**
**in that** each application's data (6) are limited to a prescribed bit rate by measuring the volume of a respective application's data (6) over a settable time interval in parallel with the forwarding of these data (6) and comparing it with the volume of data which corresponds to the prescribed bit rate.

4. Method according to one of the preceding claims, **characterized**
**in that** step c. is performed only for data (6) from applications which require transmission in real time.

5. Method according to one of the preceding claims, **characterized**
**in that** step c. involves each communication node (2, 5, 7) which is to be encountered by a respective application's data using a guaranteed bit rate, required by the respective application, and a maximum supportable bit rate to derive a bandwidth value for a transmission resource which is to be reserved, and reserving this transmission resource.

6. Method according to one of the preceding claims, **characterized**
**in that**, when the application specific contexts are created at each communication node (2, 5, 7), the ratio of a guaranteed bit rate required by the respective application and a maximum supportable bit rate can be varied.

7. Method according to one of the preceding claims, **characterized**
**in that** a particular share (B_{SumReal}) of transmission resources from total transmission resources (Bₜₒₜₐₗ) is reserved for data from applications which respectively require a transmission in real time.

8. Method according to Claim 7,
**characterized**
**in that** the share (B_{SumReal}) of transmission resources which is reserved for data (6) from applications which respectively require transmission in real time is chosen to be smaller than the total quantity of transmission resources (Bₜₒₜₐₗ).

9. Method according to one of the preceding claims, **characterized**
**in that** step d. involves the applications' data (6) being classified into at least two categories (8, 9) in line with the application specific contexts and being forwarded in line with these categories (8, 9).

10. Method according to Claim 9,
**characterized**
**in that** the two categories correspond to classification into realtime applications (8) and non-realtime applications (9).

## Revendications

1. Procédé de transmission de données (6) d'applications avec des exigences de transmission différentes dans un réseau de communication de données à commutation de paquets (1) avec des noeuds de communication (2, 5, 7), le procédé comportant au moins les étapes suivantes :
a. limitation des données (6) de toute application à un débit binaire prédéfini dans un noeud de communication (2, 5, 7) par lequel doit passer la transmission des données (6) d'une application respective,
b. création et stockage de contextes spécifiques aux applications dans tous les noeuds de communication (2, 5, 7) par lesquels doit passer la transmission des données (6) d'une application respective ;
c. réservation de ressources de transmission dans tous les noeuds de communication (2, 5, 7) par lesquels doit passer la transmission des données (6) d'une application respective, conformément aux contextes spécifiques aux applications ;
d. retransmission des données (6) de toute application d'un noeud de communication (2, 5, 7) par lequel doit passer l'application respective vers un autre noeud de communication (2, 5, 7) à passer, conformément aux contextes spécifiques aux applications.

2. Procédé selon la revendication 1, **caractérisé en ce que** l'étape a. est exécutée dans un noeud de communication d'accès (Edge Node) au réseau de communication de données à commutation de paquets (1).

3. Procédé selon la revendication 1 ou 2, **caractérisé en ce que** la limitation des données (6) de toute application à un taux binaire prédéfini est réalisée par le fait que, parallèlement à la retransmission des données (6) d'une application respective, la quantité de ces données (6) est mesurée sur un intervalle de temps déterminable et est comparée à la quantité de données correspondant au taux binaire prédéfini.

4. Procédé selon l'une des revendications précédentes, **caractérisé en ce que** l'étape c. n'est exécutée que pour des données (6) d'applications qui exigent une transmission en temps réel.

5. Procédé selon l'une des revendications précédentes, **caractérisé en ce que**, à l'étape c., chaque noeud de communication (2, 5, 7) par lequel doivent passer les données d'une application respective déduit, d'un débit binaire garanti exigé par l'application respective et d'un débit binaire maximal à supporter, une valeur de largeur de bande pour une ressource de transmission à réserver, et réserve celle-ci.

6. Procédé selon l'une des revendications précédentes, **caractérisé en ce que**, à la création des contextes spécifiques aux applications dans chaque noeud de communication (2, 5, 7), le rapport entre un débit binaire garanti exigé par l'application respective et un débit binaire maximal à supporter est variable.

7. Procédé selon l'une des revendications précédentes, **caractérisé en ce qu'**une part déterminée (B_{SumEcht}) de ressources de transmission de l'ensemble des ressources de transmission (total) est réservée pour des données d'applications qui exigent respectivement une transmission en temps réel.

8. Procédé selon la revendication 7, **caractérisé en ce que** la part (B_{SumEcht}) de ressources de transmission qui est réservée pour des données (6) d'applications qui exigent respectivement une transmission en temps réel est choisie inférieure à l'ensemble des ressources de transmission (Bₜₒₜₐₗ).

9. Procédé selon l'une des revendications précédentes, **caractérisé en ce que**, à l'étape d., les données (6) des applications sont réparties en au moins deux catégories (8, 9) conformément aux contextes spécifiques aux applications et sont retransmises conformément à ces catégories (8, 9).

10. Procédé selon la revendication 9, **caractérisé en ce que** les deux catégories correspondent à une répartition en applications en temps réel (8) et en applications non en temps réel (9).
